# EUROPEAN PATENT APPLICATION

(11) **EP 2 949 207 A2**
(43) Date of publication of application: **02.12.2015**
(21) Application number: 15167322.5
(22) Date of filing: 12.05.2015
(51) Int. Cl.: A01K 1/02

(54) **DOOR FOR CLOSING A SPACE FOR KEEPING LIVESTOCK AND A FEEDING BOX WITH A DOOR**

(30) Priority: 28.05.2014 NL 2012901
(71) Applicant: de Boer, Abel Richard, 8566 JM Nijemirdum (NL)
(72) Inventor: de Boer, Abel Richard, 8566 JM Nijemirdum (NL)
(74) Representative: 't Jong, Bastiaan Jacob

(57) **Abstract**

A door for closing a space, comprises a frame, a door part arranged for rotation around a pivot shaft lying in a main plane, for rotation between an opened and a closed position, the door part being suitable in the closed position for closing a space, engaging means for engaging an animal, which engaging means are arranged slidably along the main plane of the frame and wherein sliding takes place between a first and second position, and coupling means arranged between the door part and the engaging means, wherein the door part is in the opened position when the engaging means are in the first position, and wherein the coupling means rotate the door part in the direction of the closed position when the engaging means are carried in the direction of the second position. The invention also relates to a feeding box comprising a door according to the invention.

## Description

The invention relates to a door for closing a space for holding livestock.

In agriculture livestock such as for instance cows, pigs, horses and so on are for instance kept for the purpose of producing, among other things, meat and milk. Optimal production involves a large number of factors, such as for instance fodder, which may differ per animal, and stress in the animals.

For the purpose of feeding the animals use is made of, among other means, feeding boxes in which an animal can take up position for the purpose of eating fodder provided in the feeding box.

In their simplest form these feeding boxes consist of two walls placed on a floor at a distance from each other with a determined quantity of fodder placed in a feed trough inside this feeding box. Such feeding boxes are not closable. It is hereby possible that, when an animal is placed in the feeding box, an animal with a higher position in the animal social hierarchy will oust the animal already present in the feeding box, for instance by biting the animal. It is therefore no longer guaranteed that the animals obtain the desired quantity of fodder, and this moreover causes stress in animals.

In order to prevent such undesirable behaviour it is known to make the feeding box closable.

In a first known embodiment each animal is provided with a transponder. When the transponder is detected in the vicinity of a receiver located between the walls, a door arranged above the feeding box will rotate and thereby close the entrance to the feeding box by means of a cylinder control. This installation is dependent for closure on the presence of electric power. In addition, all animals must have a transponder. It should be noted generally that this feeding box is relatively complex and thereby also expensive.

In a second known embodiment a door is arranged on each of the side walls on the entry side of the feeding box. These doors pivot along the floor between a closed position, in which they close the feeding box, and an opened position in which they are directed outward relative to the feeding box. The doors are connected here to an engaging means in the feeding box, whereby the doors close automatically when an animal is placed in the feeding box. The drawback of this feeding box is that the doors are directed outward in the opened position, whereby these doors take up space in an access path adjacent to the feeding box. In order to prevent the access path being blocked by the doors, whereby circulation of the animals may be reduced in the opened position, an access path will therefore have to be chosen which is wider than would be strictly necessary without the presence of the doors. More accommodation space is hereby necessary, which makes this installation voluminous and thereby also expensive.

It is now an object of the invention to reduce or even obviate the above stated drawbacks.

This object is achieved according to the invention with a door for closing a space for holding livestock, comprising:
- a frame;
- a door part arranged on the frame for rotation around a pivot shaft, this pivot shaft lying in a main plane, which rotation takes place between an opened position and a closed position, and which door part is suitable in the closed position for closing a space for holding livestock;

- engaging means oriented downward from the main plane for engaging on the body of an animal, which engaging means are arranged slidably along the main plane of the frame and wherein the sliding takes place between a first position and a second position; and
- coupling means arranged between the door part and the engaging means, wherein the door part is in the opened position when the engaging means are in the first position, and wherein the coupling means rotate the door part in the direction of the closed position when the engaging means are carried in the direction of the second position.

A door according to the invention can be placed on an existing feeding box and can in this way be used to temporarily close the feeding box with the door part in the closed position at the moment that an animal is present therein. An example of a feeding box where this door can be applied in this way is the above stated simple embodiment consisting of two wall parts placed spaced apart. In such a feeding box fodder can be placed close to the side opposite the entrance.

An animal in search of fodder will enter the feeding box via the entrance, and the engaging means, at that moment in the first position, will engage here on the animal. At the moment that the animal walks further into the feeding box here, the engaging means will slide in the direction of the second position. Because of the coupling means the sliding of the engaging means will result in the door part pivoting in the direction of the closed position.

Owing to the placing of the pivot shaft in the main plane, which main plane preferably lies at a right angle to the directions of the wall parts of the feeding box, the door part will make an upward pivoting movement in the opened position, whereby the circulation in the accommodation improves.

The distance covered by the engaging means between the first and the second position is determined on the basis of the desired rotation along the pivot shaft of the door part between the opened and the closed position. The pivot shaft is placed at a distance from the entrance such that in the opened position the door part is in a high position such that the entrance is not closed by the door part. The pivot shaft preferably lies parallel to the floor of the space which is closed by the door part in the closed position, since this increases the ease of installation of the device.

The engaging means are preferably in close-fitting form and/or of a material such that, while they guarantee a good fit round the animal, and therefore a good operation of the door part, they do however have clearance such that any movement of the animal in the width direction of the feeding box is not obstructed, or only obstructed to limited extent, by the engaging means.

In a preferred embodiment of a door according to the invention the door comprises two connecting bars, which connecting bars are arranged with a first end on opposite sides of the door part and which connecting bars are arranged with a second end on the pivot shaft on two opposite sides of the frame.

A coupling of the door part to the pivot shaft arranged on the frame is possible by means of the connecting bars, which preferably run parallel to each other. Each of the connecting bars is preferably curved here such that the first part runs parallel to the main plane and the second part to the door part. A good closure is in this way obtained.

In a further preferred embodiment of a door according to the invention the coupling means comprise at least one cable.

A cable is a reliable and advantageous embodiment of the coupling means. This cable is preferably arranged inside or close to the main plane or thereabove, so that the operation thereof is not impeded by the presence of the animal in the feeding box. For this same purpose it can also be advantageous to have the cable run along the sides of the door part and the frame. The coupling means can for instance comprise steel wire so as to thereby achieve a strong connection.

In yet another preferred embodiment of a door according to the invention the cable runs over at least one pulley.

It is possible by means of a pulley to guide the path of the coupling means and also remove it further from the route covered by the animal in the feeding box. If a plurality of pulleys are used it is moreover possible to increase the force used to rotate the door part while the animal exerts the same amount of force. The door part will however then move more slowly here, while the stroke of the engaging means is in contrast increased.

The position of at least one pulley is preferably displaceable relative to the frame. The path of the coupling means can in this way be further removed from the shortest path between the door part and the engaging means, whereby the door closes sooner. This can be advantageous when adjusting the door to different types of animal, or to different types of feeding box, which for instance differ in length in the direction of movement.

In another preferred embodiment of a door according to the invention the coupling means comprise a stretchable part.

It may be the case that, at the moment that the engaging means have been brought into the second position by the movement of the animal, the fodder is still not within reach of the animal, or that a movement further into the feeding box is desired for another reason. The coupling means can for this reason comprise a stretchable part, such as for instance a spring, which is in a neutral position during the movement of the engaging means between the first and the second position but which stretches in the second position in the case of further movement. It is also possible for the choice of material for the coupling means to be such that they inherently allow a certain stretch in the longitudinal direction of the feeding box.

In yet another preferred embodiment of a door according to the invention the engaging means are arranged along a guide, this guide lying transversely of the pivot shaft and within the main plane.

A guide ensures that the engaging means are moved through the feeding box in a reliable and predictable manner. This guide can for instance consist of a number of holders through which a beam or rod with the engaging means and the coupling means mounted thereon is movably arranged. It is however also possible for the guide to comprise a beam, round which beam the engaging means engage. It can be advantageous here to arrange a locking in order to limit the area of movement, for instance in the form of a protrusion on the rod which engages on the holder, or vice versa.

In yet another preferred embodiment of a door according to the invention the engaging means comprise a U-shaped bracket with the tips oriented downward for the purpose of engaging with the tips on the neck of an animal.

A U-shaped bracket (or in any case a bracket comprising a part running above an animal placed under the main plane, with two parts oriented on either side along the neck of the animal) has the advantage that the bracket ensures a good engagement without having for instance a choking effect, as could be the case for instance if the bracket were to run under the neck of the animal.

Another preferred embodiment of a door according to the invention comprises compensating means for compensating the gravitational force on the weight of the door part.

At the moment that an animal makes a backward movement, for instance because the animal has no more need for fodder, the compensating means will ensure that the engaging means and the door part connected thereto follow the movement of the animal, whereby the door is eventually opened. An animal can in this way walk out of the feeding box in simple manner.

In addition, compensating means reduce the force necessary for the rotation of the door part, whereby an animal will be able to close the door more easily.

Different types of compensating means can generally also be used in one door in addition to each other, such as for instance a combination of a counterweight and a spring.

In a further preferred embodiment of a door according to the invention the compensating means comprise a counterweight arranged on the opposite side of the pivot shaft relative to the door part.

Part of the gravitational force on the fence is neutralized by arranging counterweights, on which gravitational force also acts, on the opposite side of the pivot shaft. These compensating means are relatively simple to arrange, very reliable and relatively inexpensive.

In yet another preferred embodiment of a door according to the invention the compensating means comprise a spring arranged between the frame and the door part.

A spring is also an example of a compensating means which is relatively simple to arrange, reliable and inexpensive.

In yet another preferred embodiment of a door according to the invention the door further comprises mounting means for mounting the door on two side walls placed a distance from each other.

The door can be mounted on a feeding box in firm manner by means of mounting means. The mounting means can for instance comprise one or more L-shaped profiles here, the first leg of which is mounted parallel to the main plane on the frame, and the other part on the wall parts of the feeding box. Because of the different known widths of feeding boxes it can be advantageous here to embody the mounting means separately, so that a difference in the width between the walls and the width of the door can be spanned by means of the mounting means.

The object of the invention is further achieved with a feeding box comprising two side walls placed at a distance from each other and enclosing a space with an entrance, wherein the feeding box is provided with a door according to the invention, wherein in the closed position the door closes the entrance and wherein in the opened position the door leaves the entrance clear, and wherein the feeding box also comprises a feed trough, which feed trough is arranged behind the second position of the engaging means.

It is also possible to embody the door according to the invention integrally in a feeding box. In order to ensure that an animal enters the feeding box of its own accord a feed trough can be placed behind the second position.

Feeding boxes according to the invention and feeding boxes with doors according to the invention can be placed at a location close to a wall or a fence, so that the side opposite the entrance is closed. The animal will in this way be more inclined to walk backwards when the animal has had enough fodder.

These and other features of the invention are further elucidated with reference to the accompanying drawings.
Figure 1 is a perspective view of a feeding box according to the invention with the door part in opened position.
Figure 2A is a side view of the feeding box according to figure 1 with the door part in the opened position.
Figure 2B is a side view of the feeding box according to figure 1 with the door part in the closed position.

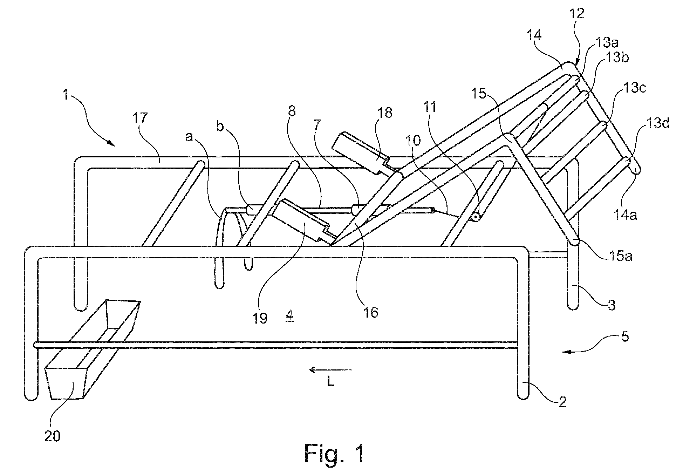

Figure 1 shows a feeding box 1 in the opened position. Feeding box 1 has two wall parts 2, 3, and a space 4 and an entrance 5 to this space 4 are created between these wall parts 2, 3. Arranged on the upper side on feeding box 1 are guides 6, 7 having therein a rod 8 on which are arranged engaging means 9. On the outer end of rod 8 a coupling means 10 is connected to a door part 12 via a pulley 11. Door part 12 comprises a number of closing bars 13a-d which are connected via connecting beams 14, 15 on either side to frame 17 for rotation around pivot shaft 16. Arranged on the other side of pivot shaft 16 are two counterweights 18, 19 which co-rotate with the rotation of connecting beams 14, 15. Just as the other parts of door part 12, the lowest points 14a, 15a of connecting beams 14, 15 lie above the upper side of frame 17, whereby an animal can walk unimpeded into feeding box 1 in direction of movement L in the direction of feed trough 20. Feed trough 20 can be any usual feed trough as known, and does not form part of the invention.

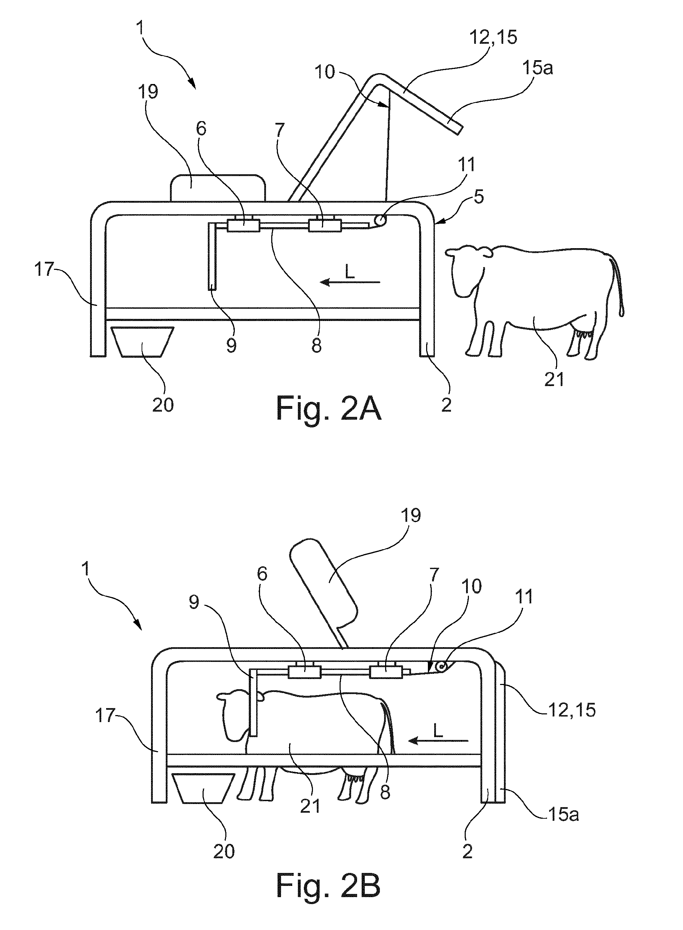

Figures 2A and 2B show the same feeding box 1 in side view. In the side view of figure 2A, in which feeding box 1 is shown in opened position, can be seen how an animal 21 approaches entrance 5 on its way to feed trough 20 and enters feeding box 1 under door part 12 in the direction of movement L. The moment that the body of animal 21 makes contact with engaging means 9, engaging means 9 and the rod 8 connected thereto will be carried along in the direction of movement L, whereby coupling means 10 cause door part 12 to pivot downward and whereby door part 12 temporarily closes entrance 5. It is conversely the case that, during a movement opposite to the direction of movement L, counterweights 18, 19 will also bring about a movement of engaging means 9 opposite to direction L, whereby door part 12 will open, after which animal 21 can walk out of feeding box 1.

## Claims

1. Door for closing a space for holding livestock, comprising:
- a frame;
- a door part arranged on the frame for rotation around a pivot shaft, this pivot shaft lying in a main plane, which rotation takes place between an opened position and a closed position, and which door part is suitable in the closed position for closing a space for holding livestock;
- engaging means oriented downward from the main plane for engaging on the body of an animal, which engaging means are arranged slidably along the main plane of the frame and wherein the sliding takes place between a first position and a second position; and
- coupling means arranged between the door part and the engaging means, wherein the door part is in the opened position when the engaging means are in the first position, and wherein the coupling means rotate the door part in the direction of the closed position when the engaging means are carried in the direction of the second position.

2. Door as claimed in claim 1, wherein the door comprises two connecting bars, which connecting bars are arranged with a first end on opposite sides of the door part and which connecting bars are arranged with a second end on the pivot shaft on two opposite sides of the frame.

3. Door as claimed in claim 1 or 2, wherein the coupling means comprise at least one cable.

4. Door as claimed in claim 3, wherein the cable runs over at least one pulley.

5. Door as claimed in any of the foregoing claims, wherein the coupling means comprise a stretchable part.

6. Door as claimed in any of the foregoing claims, wherein the engaging means are arranged along a guide, this guide lying transversely of the pivot shaft and within the main plane.

7. Door as claimed in any of the foregoing claims, wherein the engaging means comprise a U-shaped bracket with the tips oriented downward for the purpose of engaging with the tips on the neck of an animal.

8. Door as claimed in any of the foregoing claims, wherein the door comprises compensating means for compensating the gravitational force on the weight of the door part.

9. Door as claimed in claim 8, wherein the compensating means comprise a counterweight arranged on the opposite side of the pivot shaft relative to the door part.

10. Door as claimed in claim 8 or 9, wherein the compensating means comprise a spring arranged between the frame and the door part.

11. Door as claimed in any of the foregoing claims, wherein the door further comprises mounting means for mounting the door on two side walls placed a distance from each other.

12. Feeding box comprising two side walls placed at a distance from each other and enclosing a space with an entrance, wherein the feeding box is provided with a door as claimed in any of the foregoing claims, wherein in the closed position the door closes the entrance and wherein in the opened position the door leaves the entrance clear, and wherein the feeding box also comprises a feed trough, which feed trough is arranged behind the second position of the engaging means.
